(19) **Europäisches Patentamt** / **European Patent Office** / **Office européen des brevets**

(11) **EP 2 173 197 B1**

(12) **EUROPEAN PATENT SPECIFICATION**

(45) Date of publication and mention of the grant of the patent:
**03.07.2019 Bulletin 2019/27**

(21) Application number: **08784967.5**

(22) Date of filing: **22.07.2008**

(51) Int Cl.:
*C11C 3/00* *(2006.01)*    *C11C 3/10* *(2006.01)*
*C12N 9/20* *(2006.01)*    *A23L 33/00* *(2016.01)*
*A23L 33/12* *(2016.01)*

(86) International application number:
**PCT/EP2008/006006**

(87) International publication number:
**WO 2009/012982 (29.01.2009 Gazette 2009/05)**

(54) **PROCESS**

VERFAHREN

PROCÉDÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **25.07.2007 EP 07252947**

(43) Date of publication of application:
**14.04.2010 Bulletin 2010/15**

(73) Proprietor: **Bunge Loders Croklaan B.V.**
**1521 AZ Wormerveer (NL)**

(72) Inventors:
• **'T ZAND, Imro**
**NL-1520 AA Wormerveer (NL)**
• **BOUWER, Sietze**
**NL-1520 AA Wormerveer (NL)**

• **BHAGGAN, Krishnadath**
**NL-1520 AA Wormerveer (NL)**
• **SCHMID, Ulrike**
**NL-1520 AA Wormerveer (NL)**

(74) Representative: **Potter Clarkson**
**The Belgrave Centre**
**Talbot Street**
**Nottingham NG1 5GG (GB)**

(56) References cited:
**EP-A- 0 457 401        EP-A- 0 739 591**
**EP-A- 0 803 196        WO-A-2006/114791**
**WO-A-2007/029020       US-A- 3 634 100**
**US-A1- 2006 105 090**

**Description**

This invention relates to a process for producing randomised palm oil stearin with a reduced level of dialkylketones (DAKs), a process for the production of a fat composition suitable for use in an infant formula, a randomised palm oil stearin, a composition comprising 1,3-dioleoyl-2-palmitoyl glyceride (OPO), a fat blend and an infant formula, all comprising specified levels of DAKs.

Triglyceride fats and oils are important commercial products and are used extensively in, for example, the food industry. Some triglycerides are nutritionally important and the triglyceride 1,3-dioleoyl-2-palmitoyl glyceride is known to be an important component of human milk fat.

Fat compositions containing the principal fatty acids found in human milk fat, in similar amounts to those found in human milk fat, may be derived from oils and fats of vegetable origin. However, a significant difference in composition arises because most glycerides of vegetable origin are unsaturated in the 2-position. In contrast, a substantial amount of palmitic acid occupies the 2-position of glycerides in human milk fat.

The difference in the distribution of acids along the glyceride positions is believed to have important dietary consequences. The distribution of fatty acids in the triglycerides of some milk fats of nutritional importance was studied by Freeman et al, (J. Dairy Sci., 1965, p.853), who reported that human milk fat contains a greater proportion of palmitic acid in the 2-position, and a greater proportion of stearic acid and oleic acid in the 1,3-positions than the milk fat of ruminants. The greater absorption of palmitic acid in the 2-position of triglycerides by infants was reported by Filer et al (J. Nutrition, 99, pp. 293-298), who suggest that the relatively poor absorption of butter fat by infants compared with human milk fat is attributable to its substantially uniform distribution of palmitic acid between the glyceride positions of the fat.

In order to most closely match the chemical and/or physical properties of triglyceride fats or oils obtained from natural sources, to that of human milk fat, therefore, it is necessary to control the distribution of the fatty acid residues on the glyceride positions. Processes are thus known for selectively producing the triglyceride 1,3-dioleoyl-2-palmitoyl glyceride (OPO) for use in replacements for human milk fat.

EP-A-0209327 discloses milk replacement fat compositions comprising the triglyceride 1,3-dioleoyl-2-palmitoyl glyceride (OPO). The fat compositions can be obtained by subjecting fatty mixtures of 2-palmitoyl glycerides to reaction with oleic acid in the presence of a catalyst, such as a lipase, which is regiospecific in activity in the 1- and 3- positions of the glycerides. Enzymatic processes of this kind are also described in GB-A-1577933. Under the influence of the catalyst, unsaturated fatty acid residues may be introduced into the 1- and 3- positions of the 2-palmitoyl glycerides by exchange with unsaturated free fatty acids or their alkyl esters.

WO 2005/036987 discloses a process for producing a fat base by reacting a palmitic rich oil with unsaturated fatty acids such as oleic acid. The total palmitic acid residue content of the fat base is at most 38% and at least 60% of the fatty acid moieties are in the 2- position of the glyceride backbone. A related disclosure can be found in WO 2005/037373, filed on the same day.

Commercial processes for producing triglycerides generally employ starting materials that are readily available at reasonable cost in large quantities. One suitable starting material that is relatively rich in triglycerides having palmitic acid in the 2- position is palm oil. Typically, palm oil is fractionated before being employed in this type of process.

WO 2007/029018 describes a process for the production of a composition comprising 1,3-dioleoyl-2-palmitoyl glyceride (OPO) in which a palm oil stearin, with an iodine value (IV) between about 2 and about 12 to is subjected to enzymic transesterification, with oleic acid or a non-glyceride ester of oleic acid.

Our copending European patent application no. 07250834.4 and International application no. PCT/EP2008/001543 relate to a process for producing OPO triglycerides that comprises randomisation of the starting material.

US 4,567,056 discloses an edible fat suitable for producing margarines and low-fat spreads displaying good spreadability, melting temperature and behaviour.

US 6,034,130 describes a specified synthetic lipid composition in which the content and the distribution of the fatty acids are said to be similar to those of human milk fat.

US-A-2006/0154986 discloses specified triglyceride compositions bearing both omega-3-unsaturated fatty acids and short chain fatty acids.

US2006/0105090 describes compositions suitable for use as a frying fat or oil which may be derived from palm oil by a process comprising interesterification and comprise triglycerides.

EP-A-0803196 discloses a hard butter additive composition which comprises the middle melting point fraction of random interesterified palm stearin.

US 3,634,100 describes margarine fat formulations having a high content of polyunsaturated fatty acids from which margarines can be prepared capable of wrapper- or tub-packaging.

WO 2007/029020 discloses a process for producing triglycerides comprising specified steps.

WO 2006/114791 describes human milk fat (HMF) substitutes, processes for their preparation, uses thereof and fat blends and infant formulae containing them.

EP-A-0457401 discloses a method for the production of mid-fraction by fractional crystallization of fatty substances, including fats and glyceride oils.

EP-A-0739591 describes triglycerides rich in polyunsaturated fatty acids.

It has been found that dialkylketones (DAKs) are produced during the chemical interesterification of lipids (Verhe R et al, 97th AOCS Annual Meeting & Expo, April 30-May 3 2006). The DAKs contain two alkyl chains derived from fatty acids i.e., they are ketones having ($C_{10}$-$C_{24}$) and ($C_{10}$-$C_{24}$) straight chain alkyl groups, where the alkyl groups may be the same or different. There remains a need to reduce the level of DAKs produced during chemical interesterification.

According to a first aspect of the invention, there is provided a process for producing randomised palm oil stearin with a reduced level of dialkylketones (DAKs), which comprises the step of chemical interesterification of palm oil stearin in the presence of an interesterification catalyst, wherein the duration of reaction and/or the reaction temperature and/or the amount of catalyst are selected so as to reduce the level of DAKs.

In another aspect there is provided a process for producing randomised palm oil stearin with a reduced level of DAKs, which comprises the step of chemical interesterification of palm oil stearin in the presence of an interesterification catalyst, wherein:

(i) the interesterification is carried out for greater than 10 minutes; and/or

(ii) the interesterification is carried out at a temperature of from 30 to 120°C; and/or

(iii) the amount of interesterification catalyst is from 0.01 to 0.50 wt.%, preferably from 0.03 to 0.20 wt.%, based on the total weight of the palm oil stearin.

In a further aspect of the invention, there is provided a process for the production of a fat composition suitable for use in infant formula which comprises: subjecting the randomised palm oil stearin produced according to the invention to enzymatic transesterification with oleic acid or a non-glyceride ester thereof; and optionally fractionating the product of enzymatic transesterification.

Figure 1 shows the HPLC separation of DAKs in the unsaponifiables using Econosphere Silica column (150*4.6 mm; 3 $\mu$m) and Evaporative Light Scattering Detection.

Figure 2 shows the effect of interesterification catalyst concentration on the formation of dialkylketones during the interesterification of palm stearin (POsIV35) catalyzed by sodium methoxide according to Example 2.

The invention allows the production of chemically randomised palm oil stearin with reduced levels of DAKs. It has been unexpectedly found that it is possible to reduce the level of DAKs produced by chemical interesterification by carrying out the chemical interesterification and selecting the duration of reaction and/or reaction temperature and/or catalyst concentration. In particular, it has been surprisingly found that it is possible to reduce the level of DAKs to acceptable levels by using a catalyst concentration of less than about 0.3 wt.%, preferably less than about 0.25 wt.%, such as from about 0.01 to about 0.25 wt.%, more preferably from about 0.03 to about 0.20 wt.%, even more preferably from about 0.05 to about 0.15 wt.%, such as from about 0.06 to about 0.1 wt.%.

The process for producing randomised palm oil stearin with a reduced level of DAKs preferably comprises selecting the catalyst concentration so as to reduce the level of DAKs. The level of DAKs is preferably reduced to below about 200 ppm, such as less than 150 ppm, for example from 1 to 139 ppm.

The chemical interesterification effects random interesterification of the glycerides in the palm oil stearin. The random interesterification may be partial or complete.

The term "chemical interesterification" does not include the use of biological means for transesterification, such as enzymes. It is preferred to use an alkali metal alkoxide for the interesterification, such as, for example, sodium methoxide, sodium ethoxide, or mixtures thereof. Other means known in the art may, however, be used, such as acidic or other basic catalysts. Examples of suitable alternative basic catalysts include alkali metal hydroxides, such as sodium hydroxide.

Preferably, the interesterification catalyst is sodium methoxide.

The interesterification is preferably carried out under vacuum (for example between 1 and 100 Pa), or under an inert atmosphere, such as nitrogen or argon, and preferably with agitation, such as stirring, of the solution.

It is particularly preferred that the interesterification reaction mixture, which comprises the palm oil stearin and the catalyst, is substantially free of water. This is because water can affect the efficiency of the catalyst as well as increase the production of DAKs. By "substantially free of water", it is intended to mean that the amount of water is less than 5 wt.% based on the palm oil stearin, preferably less than 1 wt.%, more preferably less than 0.1 wt.% or 0.01 wt.%,

such as about 0 wt.% water. Any water in the palm oil stearin may be removed by heating under vacuum at a temperature of greater than, for example, 90°C.

The palm oil stearin may be dried to remove water before interesterification. Preferably, the palm oil stearin is dried such that substantially all of the water in the palm oil stearin is removed.

In one embodiment of the invention, the chemical interesterification is preferably carried out for greater than 25 minutes, such as greater than 40 minutes or 50 minutes and/or less than 10 hours, preferably less than 5 hours, more preferably less than 2 hours. Preferably, the interesterification is carried out for at least 30 minutes, such as from 35 to 60 minutes, more preferably from about 40 to about 50 minutes. The reaction time or duration of reaction is measured from when the catalyst and the palm oil stearin are combined. The catalyst may be added to the palm oil stearin, or vice versa. Alternatively, the catalyst and the palm oil stearin may be added simultaneously to a solvent such as the alcohol from which an alkoxide is derived, for example, methanol or ethanol. A solution comprising the catalyst and palm oil stearin is preferably formed.

The interesterification is preferably carried out at a temperature of from 30°C to 120°C, more preferably from 35°C to 100°C, most preferably from 45°C to 90°C, even more preferably from 60°C to 90°C, such as from about 70°C to about 80°C. The reaction temperature is preferably less than 110°C. The reaction temperature is the temperature of a reaction mixture comprising the palm oil stearin, the interesterification catalyst and any solvent, if present.

The amount of interesterification catalyst, such as sodium methoxide or sodium ethoxide, is preferably from 0.03 to 0.50 wt.% based on the total weight of the palm oil stearin, more preferably from 0.06 to 0.3 wt.%, most preferably from about 0.07 to 0.25 wt.%, such as from 0.04 to 0.15 wt.%, 0.03 to 0.10 wt.%, 0.05 to 0.09 wt.% or 0.07 to 0.08 wt.%.

In one embodiment, the catalyst concentration is less than about 0.3 wt.%, preferably less than about 0.25 wt.%, such as from about 0.01 to about 0.25 wt.%, more preferably from about 0.03 to about 0.20 wt.%, even more preferably from about 0.05 to about 0.15 wt.%, such as from about 0.06 to about 0.1 wt.% based on the weight of the palm oil stearin and the temperature is optionally less than about 110°C.

In one embodiment, the duration of the reaction i.e., interesterification reaction is preferably greater than 25 minutes, such as greater than 30 minutes, for example between 35 minutes and 1 hour, the reaction temperature is preferably from 60 to 120°C, such as from 70 to 90°C and the concentration of catalyst is preferably from 0.03 to 0.1 wt.%, more preferably from 0.05 to 0.09 wt.%.

In another embodiment, the duration of the reaction is preferably greater than 40 minutes, for example between 40 minutes and 2 hours, more preferably between 45 minutes and 1.5 hours, the reaction temperature is preferably from 65 to 110°C, such as from 70 to 80°C, and the concentration of catalyst is preferably from 0.06 to 0.25 wt.%, more preferably from 0.1 to 0.20 wt.%.

In a yet further embodiment, the duration of the reaction is preferably greater than 50 minutes, for example between 50 minutes and 2 hours, more preferably between 55 minutes and 1.5 hours, the reaction temperature is preferably from about 70 to about 100°C, such as from about 75 to about 85°C and the concentration of catalyst is preferably from 0.08 to 0.15 wt.%, more preferably from 0.1 to 0.12 wt.%.

In a yet further embodiment, the duration of the reaction is preferably greater than 50 minutes, for example between 50 minutes and 2 hours, more preferably between 55 minutes and 1.5 hours, the reaction temperature is preferably from about 70 to about 100°C, such as from about 75 to about 85°C and the concentration of catalyst, such as sodium methoxide, is preferably from 0.03 to 0.15 wt.%, more preferably from 0.06 to 0.12 wt.%.

The interesterification reaction is preferably stopped by adding water, such as demineralised water, to the reaction mixture. Any catalyst can be removed as an aqueous phase using means known in the art.

The randomised palm oil stearin may be separated from any aqueous phase in the reaction mixture and then dried in order to form a product which can be used further.

Preferably, the palm oil stearin which is subject to interesterification comprises less than 5 wt.% free fatty acids (FFA) based on the total weight of the composition, such as from 1 to 3 wt.%, more preferably less than 1 wt.%, most preferably less than about 0.1 wt.%.

The term fatty acid used herein refers to saturated or unsaturated, straight chain carboxylic acids having from 4 to 24 carbon atoms, preferably from 12 to 22 carbon atoms. Unsaturated acids may comprise one, two, or more double bonds, preferably one or two double bonds.

The palm oil stearin which is subjected to interesterification may comprise triglycerides, diglycerides, monoglycerides, free fatty acids, or combinations thereof.

In one embodiment, the palm oil stearin preferably comprises at least 80 wt. % triglycerides based on the total weight of the composition, more preferably at least 90 wt.% triglycerides, most preferably from 90 to 95 wt.% triglycerides, such as about 95 wt.%.

The palm oil stearin may be in the form of a liquid, i.e., an oil, or a solid at room temperature (about 30°C). The palm oil stearin is preferably in the form of a solid at room temperature. The melting point of the palm oil stearin is preferably greater than 40°C, more preferably greater than 45°C, most preferably greater than 50°C, such as from 41 to 60 °C.

It is particularly preferred that the palm oil stearin is a palm oil stearin fraction.

The palm oil stearin fraction may be a single palm oil stearin or a mixture of palm oil stearins, for example obtained in different fractionation processes and/or having different physical and/or chemical properties, such as different melting temperatures or different iodine values (IVs). Preferably, the palm oil stearin fraction is bleached and deodorised before interesterification. Bleaching and deodorising can be carried out using techniques that are well known in the art.

The term "stearin", as used in this specification, includes a triglyceride mixture or fat blend from which at least 10 % by weight of the lower melting constituents have been removed by some kind of fractionation, e.g., dry fractionation or solvent fractionation.

Preferably, the palm oil stearin is provided by fractionating palm oil or a derivative thereof. Although fractionation may be carried out with or without a solvent, it is preferred that the fractionation of the palm oil comprises dry fractionation. Thus, the process of fractionation is preferably carried out in the absence of a solvent.

The palm oil stearin, which is subject to interesterification, preferably has an iodine value (IV) from about 2 to about 40, more preferably from about 4 to about 35, such as from about 20 to about 30. Palm oil stearin having an IV of from 20 to 40 or from 4 to 14 is particularly preferred. The IV is determined according to standard methods known in the art (e.g., ASTM D5554-95 (2001)).

The process of the invention may, in a preferred embodiment, use a palm oil stearin which comprises a mixture of at least two palm oil stearins having different iodine values. For example, the palm oil stearin may comprise a mixture of a first palm oil stearin having an iodine value of from about 10 to about 20 and a second palm oil stearin having an iodine value of from about 25 to 50.

In another aspect, the invention provides a randomised palm oil stearin comprising DAKs and wherein the DAKs are present at a level of up to 140 ppm, such as less than 140 ppm, for example, less than 120 ppm, less than 45 ppm or 30 ppm, or from 1 to 139 ppm. The randomised palm oil stearin preferably comprises DAKs at a level of from 2 to 120 ppm, more preferably from 5 to 100 ppm, even more preferably from 10 to 90 ppm, such as from 20 to 80 ppm, most preferably from 30 to 60 ppm. In a preferred embodiment, the randomised palm oil stearin comprises DAKs at a level of from 1 to 49 ppm, for example from 5 to 40 ppm or from 10 to 25 ppm. The randomised palm oil stearin is preferably a chemically randomised palm oil stearin i.e. it has been produced by a chemical interesterification process, such as the process defined herein.

The term "reduced level of DAKs", as mentioned above in relation to the process, preferably includes these levels of DAKs. Thus, the process of the invention preferably produces the above randomised palm oil stearin comprising DAKs at a level of, for example, from 1 to 139 ppm.

Preferably, the randomised palm oil stearin comprises at least partially randomized glycerides.

The interesterification may not be fully random but is preferably random to a large extent, for example greater than 75 %, more preferably greater than 85 %, such as greater than 95 % of the fatty acid residues may change during the reaction i.e., less than 25 %, more preferably less than 15 %, such as less than 5 % of the fatty acids retain their original position in the starting triglyceride. The percentages are based on the number of fatty acyl groups present.

For palm oil stearin the degree of randomisation can be determined by measuring the Sn-2 value of the C16:0 fatty acids in the product. The Sn-2 value is the number of moles (or weight) of palmitoyl residues present at the 2-position of the glyceride divided by the total number of moles (or weight) of palmitoyl residues present in the glyceride. Thus, for example, pure OPO will have an Sn-2 value for C16:0 of 1 and pure POO will have an Sn-2 value of 0, whereas a fully randomised form of OPO (i.e., containing POO and OPO) will have an Sn-2 value of 0.33. Preferably, in the present invention, the interesterification is carried out to give an Sn-2 value for C16:0 of from 0.300 to 0.333, more preferably from 0.310 to 0.333, even more preferably from 0.315 to 0.333, such as 0.320 to 0.333 or 0.325 to 0.333.

The randomised palm oil stearin according to any of the above embodiments, with a reduced level of DAKs, may be used in itself or to produce a composition comprising 1,3-dioleoyl-2-palmitoyl glyceride (OPO).

In order to provide a composition comprising 1,3-dioleoyl-2-palmitoyl glyceride (OPO), the randomised palm oil stearin of the invention is preferably subjected to enzymatic transesterification (i.e., not chemical interesterification as defined above) with oleic acid or a non-glyceride ester thereof. The enzymatic transesterification aims to increase the amount of OPO in the randomised palm oil stearin according to the invention. The non-glyceride esters of oleic acid that are optionally used in the invention, in addition to or as an alternative to, oleic acid, are preferably alkyl esters. The term "alkyl", as used herein, includes straight chain or branched saturated hydrocarbons having from 1 to 12, more preferably 1 to 6, carbon atoms.

The randomised palm oil stearin preferably comprises 2-palmitoyl glycerides.

The enzymatic transesterification according to the process of the present invention is preferably carried out using a 1,3 specific lipase as a biocatalyst. In the enzymatic transesterification, the fatty acids on the 2-position of the triglycerides typically do not change (for example, less than 10% by moles of fatty acyl groups in the 2-position, more preferably less than 5%, such as less than 1%, change during the process).

Under the influence of a 1,3 lipase, unsaturated fatty acid residues may be introduced into the 1- and 3-positions of the 2-palmitoyl glycerides by exchange with the fatty acid residues of other glycerides or more preferably by means of transesterification in the fatty mixture. Exchange preferably takes place between unsaturated free fatty acids, preferably oleic acid, or alkyl esters of oleic acid with alcohols having from 1 to 6 carbon atoms. The 2-palmitoyl glycerides modified in this way may be separated from the reaction mixture.

The enzymatic (enzyme or enzymic) transesterification reaction in the process of the present invention selectively exchanges palmitic acid with oleic acid on the 1,3-position rather than the 2-position. The transesterification reaction is typically performed to reach or approach equilibrium at a conversion ratio of a minimum of at least 50%, preferably at least 60%, most preferably at least 70%.

The randomised palm oil stearin is selectively transesterified with oleic acid or an oleoyl ester. This reaction preferentially replaces residues at the 1- and 3-positions of the glyceride relative to those at the 2- position. Thus, the product has greater amounts of the oleoyl residue at the 1- and 3- positions than at the 2-position. The conditions of the process are selected so as to provide the desired degree of selectivity from the enzyme. Preferred enzymes are lipases from *Rhizopus delemar* and *Rhizomucor miehei.*

Preferably, in the transesterification reaction randomised palm oil stearin produced according to the invention, is mixed with an oleic acid concentrate (comprising free oleic acid at a concentration of greater than 65 % by weight, preferably greater than 70 % by weight, most preferably greater than 75 % by weight). Alternatively, the oleic acid may be provided as a mixture comprising oleic acid (preferably in an amount of greater than 65 % by weight), linoleic acid and, optionally, one or more other fatty acids. The ratio of the randomised palm oil stearin to oleic acid concentrate is preferably from 0.1:1 to 2:1, more preferably from 0.4:1 to 1.2:1, even more preferably from 0.4:1 to 1:1, most preferably from 1:1.1 to 1:2 on a weight basis.

The enzymatic reaction is preferably carried out at a temperature of from 30°C to 90°C, preferably from 50°C to 80°C, such as about 60°C to 70°C, and may be conducted batchwise or in continuous fashion, with or without a water-immiscible organic solvent.

Before the enzyme transesterification reaction, the humidity is preferably controlled to a water activity between 0.05 and 0.55, preferably between 0.1 and 0.5, depending on the type of biocatalyst enzyme system used. The reaction may be performed, for example, at 60 °C in a stirred tank or in a packed bed reactor over biocatalysts, based on concentrates of Lipase D (*Rhizopus oryzae,* previously classified as *Rhizopus delemar,* from Amano Enzyme Inc., Japan) or immobilised concentrates of *Rhizomucor miehei* (Lipozyme RM IM from Novozymes A/S, Denmark).

The palmitic acid or palmitic non-glyceride esters are preferably separated from the desired OPO glyceride product. It will be appreciated that the separation is not usually complete and that both the materials separated and the product that remains will be mixtures. Also, the separation of the palmitic acid or palmitic non-glyceride esters will normally also separate other fatty acids or fatty acid non-glyceride esters from the product. The term "fatty acid", as used herein, refers to straight chain, saturated or unsaturated, carboxylic acids having from 12 to 24 carbon atoms.

In order to separate palmitic acid and other fatty acids or palmitic non-glyceride esters and other glycerides from OPO the transesterified mixture (optionally after further treatment, such as isolation of the fat phase) is preferably distilled. Distillation is preferably carried out at low pressure (e.g., lower than 10 mbar) and elevated temperatures (e.g., greater than 200 °C) to remove the fatty acids from the transesterified composition.

The process of the invention may further comprise the step of fractionating, for example, dry fractionating, the product of enzymatic transesterification obtained to form a composition comprising an increased amount of OPO. However, this step may not be required depending on the purity of the final product and the desired end use of the product.

The composition comprises: 1,3-dioleoyl-2-palmitoyl glyceride (OPO); and DAKs, wherein the DAKs are present at a level of up to 140 ppm, such as less than 140 ppm, for example, less than 120 ppm, less than 45 ppm or 30 ppm, or from 1 to 139 ppm. The composition preferably comprises DAKs at a level of from 2 to 120 ppm, more preferably from 5 to 100 ppm, even more preferably from 10 to 90 ppm, such as from 20 to 80 ppm, most preferably from 30 to 60 ppm. In a preferred embodiment, the composition comprises DAKs at a level of from 1 to 49 ppm, for example from 5 to 40 ppm or from 10 to 25 ppm.

The composition preferably comprises 1,3-dioleoyl-2-palmitoyl glyceride (OPO) in an amount of at least 25 wt.% based on the total weight of the composition, more preferably at least 50 wt.%, even more preferably at least 75 wt.%, most preferably at least 85 wt.%, such as from 30 to 95 wt.%, 40 to 80 wt.% or 50 to 70 wt.%.

The composition produced according to the invention preferably comprises not more than 45 wt%, more preferably not more than 42 wt% of palmitic acid, based on total fatty acid content, and/or at least 55 wt%, more preferably at least 58 wt% of the palmitic acid residues are present in the 2-position of the glyceride.

A preferred composition of the invention preferably comprises not more than 42 wt% of palmitic acid, based on total fatty acid content, and at least 58 wt % of the palmitic acid residues are present in the 2-position of the glyceride.

Preferably, the tripalmitoylglyceride (PPP) content of the composition produced according to the invention is less than 9 % (more preferably less than 8 %) by weight of the composition.

Preferably, the composition produced according to the invention is blended with at least one vegetable oil to form a fat blend for use as the fat in a human milk fat replacement product. Typically, the amount of vegetable oil varies from 1 % to 75 wt.%, more preferably from 5 to 60 wt.%, such as from 10 to 50 wt.%, based on the total weight of the fat blend. Examples of suitable vegetable oils include sunflower oil, high oleic sunflower oil, safflower oil, coconut oil, palm kernel oil, rapeseed oil and soybean oil and mixtures thereof. The resulting fat blends preferably have a Solid Content Index measured by NMR-pulse on non-stabilised fats within the following ranges: NO = 35-55; N10 = 25-50 and N30 </= 10. These values were preferably obtained by melting the fat blend at 80 °C, holding at 60 °C or higher for at least 10 minutes, cooling to 0°C and holding at 0 °C for 16 hours, heating to the measurement temperature N and holding at that temperature for 30 minutes before measuring the N value.

In another aspect, the invention provides a fat blend comprising: a composition which comprises 1,3-dioleoyl-2-palmitoyl glyceride (OPO); at least one vegetable oil, such as in the above amount; and DAKs and wherein the DAKs are present at a level of up to 138 ppm, such as less than 138 ppm, for example, less than 120 ppm, less than 45 ppm or 30 ppm, or from 1 to 137 ppm. The blend preferably comprises DAKs at a level of from 2 to 120 ppm, more preferably from 5 to 100 ppm, even more preferably from 10 to 90 ppm, such as from 20 to 80 ppm, most preferably from 30 to 60 ppm. In a preferred embodiment, the blend comprises DAKs at a level of from 1 to 30 ppm, for example from 5 to 25 ppm.

Alternatively, the composition of the invention may be blended with a source of docosahexaenoic acid (DHA) or eicosapentaenoic acid (EPA), such as fish oil or a microbial oil, more preferably in a weight ratio of from 10:1 to 1:10.

The compositions or fat blends of the invention may be suitable for replacing at least a part of the fat in infant food formulations. Infant food formulations may comprise the composition or fat blend of the invention together with one or more of protein, carbohydrate, minerals and vitamins. The present invention also therefore contemplates the production of infant food compositions comprising fat components, for example in the approximate relative weight proportions 2.5:1:5, wherein at least a part of the fat normally used in such formulations is replaced by the composition or fat blend made in accordance with the present invention. Dry formulations containing this mixture, together with additional components customary in such formulations such as, may be dispersed for use in sufficient water to produce an emulsion of approximately 2 to 5 grams of fat per 100 ml of dispersion. Therefore, an infant food formulation may be prepared by packaging and labelling a composition comprising OPO triglyceride.

The infant food formula comprises the composition or blend according to the invention and DAKs, and wherein the DAKS are present up to a level of about 40 ppm, such as from 1 to 28 ppm. The formula preferably comprises DAKs at a level of from 1 to 20 ppm, more preferably from 5 to 15 ppm, even more preferably from 5 to 10 ppm, such as from 2 to 9 ppm, most preferably from 3 to 8 ppm. In a preferred embodiment, the formula comprises DAKs at a level of from 1 to 9 ppm.

In another aspect, the invention relates to a process for producing infant formula comprising the step of chemical interesterification of palm oil stearin in the presence of an interesterification catalyst, wherein the amount of catalyst is selected so as to reduce the level of DAKs and the infant food formula comprises DAKs, and wherein the DAKs are present at a level of up to 40 ppm.

The chemical interesterification may be carried out in accordance with any of the embodiments set out above. The process may further comprise any of the steps described above in order to produce infant formula as defined according to any of the embodiments described herein.

Preferably, the amount of interesterification catalyst is from 0.03 to 0.20 wt.% based on the total weight of the palm oil stearin.

The listing or discussion of an apparently prior-published document in this specification should not necessarily be taken as an acknowledgement that the document is part of the state of the art or is common general knowledge.

In the examples and throughout this specification, all percentages, parts and ratios are by weight unless indicated otherwise.

**Examples:**

**Example 1:**

Randomisation of palm oil stearin fraction by chemical interesterification

1 kg of palm oil stearin fraction with iodine value of 14 (POs14) is heated under vacuum to 110 °C for 15 minutes to remove all water. The vacuum is interrupted to add 0.05 % sodium ethoxide and the reaction is continued under vacuum during 45 minutes at 70°C. The reaction is stopped by washing the oil several times with demineralised water at 80°C.

Finally, the fat is dried by vacuum. The levels of DAKs in the fat can be quantified using the following protocol.

Determination of dialkyl ketones in interesterified edible oils and fats by straight phase high performance liquid chromatography

**1. Scope**

This procedure is applicable to oils and fats.

**2. Background/Introduction**

The sample is saponified with an ethanolic potassium hydroxide solution. The unsaponifiables are extracted with petroleum ether. After washing the solvent is evaporated and the residue dissolved in a mixture of toluene and hexane. This solution is analysed on a Silica straight phase HPLC system with an Evaporative Light Scattering Detector.

**3. Reactions**

None.

**4. Reagents and materials**

4.1 Reagents

ethanol (analytical grade)
potassium hydroxide (analytical grade)
petroleum ether (40-65)
distilled water
sodium chloride (analytical grade)
hexane (analytical grade)
toluene (analytical grade)
ethyl acetate (analytical grade)
formic acid (analytical grade)
dialkyl ketones
2 M ethanolic KOH: dissolve 35 gram KOH in 25 ml water under a gentle flow of nitrogen. Allow the solution to cool down to room temperature and dilute with ethanol to 250 ml.

4.2 Standard solutions

DAK primary solution: weigh out 25 mg DAK in a 100 ml flask. Dissolve the material in a mixture of toluene/hexane (1:1). Record the weight of the solvent.
DAK dilution 1: Pipette 2 ml of the primary solution in a 10 ml flask and record the weight of the solution. Dilute with toluene/hexane (1:1) and record the weight of the solvent.
DAK dilution 2: Pipette 2 ml of the DAK dilution 1 in a 10 ml flask and record the weight of the solution. Dilute with toluene/hexane (1:1) and record the weight of the solvent.

**5. Apparatus and equipment**

20 ml test-tube with screw cap
1000 μl Eppendorf pipette
analytical balance
water bath
shaker
2 and 24 ml vials
heating block

**6. Pre-treatment**

The sample is heated until it is fully melted. Avoid overheating of the sample. In this state the sample should be clear. Moisture can be removed by adding $Na_2SO_4$ for example.

**7. Procedure**

7.1 Calibration curve

Transfer some of the diluted DAK solutions 1 and 2 to HPLC auto sampler vials. Fill a vial with some of the hexane/toluene (1:1) mixture to be used as blanc. Set up the auto sampler to inject the following sequence: blanc (20 μl), DAK solution 2 (20, 40, 60 and 80 μl), DAK solution 1 (20, 40, 60 and 80 μl). Set up a calibration curve by plotting the amount of DAK to the peak area (see: 8. Quantification).

7.2 Saponification

Pipette 1000 μl of sample in a test-tube and record the weight. Add 10 ml 2 N ethanolic KOH solution and some boiling stones. Close the vial firmly and heat the solution for 20 minutes at 90°C. Cool the test-tube to room temperature, add approximately 10 ml of water and shake. If necessary, the sample can be heated to dissolve the soaps.
Add 5 ml petroleum ether and mix the solution several times with a shaker. Pipette a few ml of a saturated aqueous NaCl solution in order to obtain clear separation. Transfer the complete petroleum ether layer to a second test-tube. Repeat the extraction two times and collect all petroleum ether in the secondary test-tube.
Add 10 ml of water/ethanol (1:1) solution to the combined petroleum ether and mix the solution several times with the aid of a shaker. Wait until two layers are visible before adding 2*2 ml of a saturated aqueous NaCl solution. Transfer the upper layer into a third 20 ml test-tube and repeat the washing step. Finally, transfer the petroleum ether layer very carefully to a 20 ml vial. Place the vial in a heating block and evaporate the solvent under a gentle flow of nitrogen. Pipette exactly 4ml of a toluene/hexane (1:1) mixture in the vial and dissolve the residue. Transfer some of the sample solution to a HPLC auto sampler vial.

**7.3 HPLC analysis**

The samples are analyzed on a HPLC system under the following conditions:

solvents: see Table 1
flow: 0.9 ml/min
runtime: 25 min
injection volume: 20 μl
detector: ELSD (drift-tube: 75°C; nebuliser: 1.75 SLPM nitrogen)

Table 1 shows a suitable HPLC gradient for the separation of DAK in unsaponifiable using an Alltech Econosphere Silica HPLC column (150*4.6 mm, 3 μm)
Solvents:

A: hexane
B: ethylacetate
C: toluene (2.5 ml/l formic acid)

All solvents should be HPLC grade with exception of the formic acid. Mix the formic acid thoroughly to make sure the acid is well dissolved.
It can be necessary to make slight changes when using a different HPLC column or depending on the column conditions.

Table 1

| Time (min) | Flow (ml/min) | Solvent | | | Curve |
|---|---|---|---|---|---|
| | | A | B | C | |
| 0 | 0.9 | 50 | 0 | 50 | 6 |
| 5 | 0.9 | 50 | 0 | 50 | 6 |
| 8 | 0.9 | 0 | 25 | 75 | 6 |
| 10 | 0.9 | 0 | 25 | 75 | 6 |

(continued)

| Time (min) | Flow (ml/min) | Solvent | | | Curve |
|---|---|---|---|---|---|
| | | A | B | C | |
| 13 | 0.9 | 50 | 0 | 50 | 6 |
| 25 | 0.9 | 50 | 0 | 50 | 6 |

**8. Quantification**

8.1 Peak identification

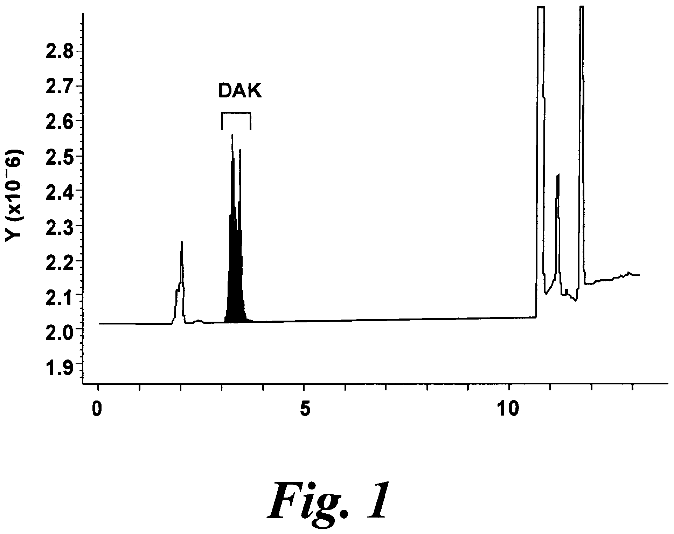

See Figure 1.

8.2 Calculation

Calculate the amount of DAK that has been injected expressed in ng. Set up a calibration curve by plotting the peak area (y) against the calculated amount of DAK (x) using the following equation. The amount of DAK, present in the sample (*DAK(ng)*) can be found by interpolation of the peak area into the calibration curve.

$$y = a * x^c$$

The amount of DAK can be calculated using:

$$DAK(mg/kg) = \frac{DAK(ng) * V(ml)}{v(\mu l) * sample(g)}$$

**9. Validation**

9.1 Reproducibility

expected value: 100 mg/kg
mean: 102 mg/kg
standard deviation: 8 mg/kg
number of analyses: 15

**Example 2:**

Interesterification Procedure

About 1kg of palm stearin (iodine value of 35 = POsIV35) was heated to 80°C and dried by applying a vacuum for 30 minutes. After this, the vacuum was released and the catalyst (sodium methoxide, NaOMe) was added to the oil. The oil was stirred further at 80°C under vacuum and samples were removed at t = 15, 30, 45 and 60 min. Three different concentrations (0.06%, 0.1% and 0.3%) of the catalyst were investigated. The level of dialkylketones in the samples was quantified according to the protocol described above. The solid fat content (SFC) in the samples was measured according to IUPAC method 2.150 (a).
inPOsIV35 = interesterified POsIV35

Results

Table 2.

|  | POs IV35 | inPOsIV35 | inPOsIV35 | inPOsIV35 | inPOsIV35 |
|---|---|---|---|---|---|
| Sample | 0 | 1 | 2 | 3 | 4 |
| NaOMe (%) | 0.3 | | | | |
| Time (min) | 0 | 15 | 30 | 45 | 60 |
| Temp (°C) | 80 | | | | |
| DAK HPLC (ppm) | 0 | 220 | 541 | 764 | 764 |
| SFC @ 10°C | 81.6 | 86.2 | 85.8 | 85.1 | 85.8 |
| SFC @ 20°C | 68.1 | 70.6 | 70.1 | 69.7 | 70.7 |
| SFC @ 30°C | 47.8 | 47.2 | 47.0 | 46.9 | 48.0 |
| SFC @ 40°C | 30.6 | 26.4 | 25.8 | 25.3 | 25.9 |
| SFC @ 45°C | 22.5 | 19.4 | 18.9 | 18.5 | 19.4 |

Table 2 shows the analysis of samples removed during the course of the reaction. The interesterification reaction was performed at 80°C under vacuum with 0.3% (wt) catalyst addition.

Table 3

|  | POs IV35 | inPOsIV35 | inPOsIV35 | inPOsIV35 | inPOsIV35 |
|---|---|---|---|---|---|
| Sample | 0 | 1 | 2 | 3 | 4 |
| NaOMe (%) | 0.1 | | | | |
| Time (min) | 0 | 15 | 30 | 45 | 60 |
| Temp (°C) | 80 | | | | |
| DAK HPLC (ppm) | 0 | 35 | 67 | 77 | 81 |
| SFC @ 10°C | 81.6 | 88.1 | 88.2 | 88.0 | 88.6 |
| SFC @ 20°C | 68.1 | 73.1 | 72.9 | 72.8 | 73.4 |
| SFC @ 30°C | 47.8 | 49.9 | 49.8 | 49.3 | 50.7 |
| SFC @ 40°C | 30.6 | 27.1 | 27.0 | 27.2 | 27.3 |
| SFC @ 45°C | 22.5 | 20.5 | 20.1 | 19.8 | 20.7 |

Table 3 shows the analysis of samples removed during the course of the reaction. The interesterification reaction was performed at 80°C under vacuum with 0.1% (wt) catalyst addition.

Table 4

|  | POsIV35 | inPOsIV35 | inPOsIV35 | inPOsIV35 | inPOsIV35 |
|---|---|---|---|---|---|
| Sample | 0 | 1 | 2 | 3 | 4 |
| NaOMe (%) | 0.06 | | | | |
| Time (min) | 0 | 15 | 30 | 45 | 60 |
| Temp (°C) | 80 | | | | |
| DAK HPLC (ppm) | 0 | 18 | 32 | 35 | 41 |
| SFC @ 10°C | 81.6 | 81.7 | 81.7 | 82.2 | 82.2 |
| SFC @ 20°C | 68.1 | 67.7 | 67.5 | 67.4 | 68.3 |
| SFC @ 30°C | 47.8 | 46.6 | 46.5 | 46.3 | 46.8 |

(continued)

|  | POsIV35 | inPOsIV35 | inPOsIV35 | inPOsIV35 | inPOsIV35 |
|---|---|---|---|---|---|
| SFC @ 40°C | 30.6 | 29.2 | 28.2 | 27.7 | 28.4 |
| SFC @ 45°C | 22.5 | 21.4 | 20.5 | 20.4 | 20.6 |

Table 4 shows the analysis of samples removed during the course of the reaction. The interesterification reaction was performed at 80°C under vacuum with 0.06% (wt) catalyst addition.

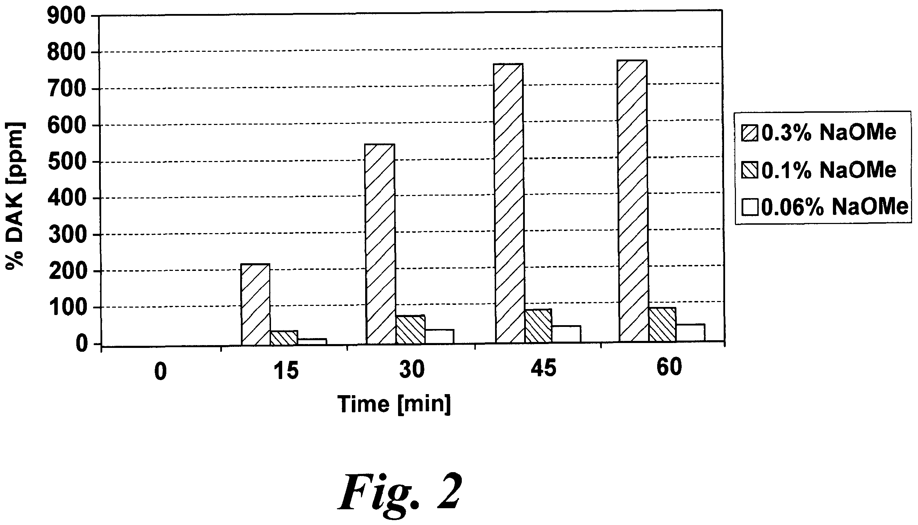

It is clear from Figure 2 that the concentration of catalyst can be used to control the level of DAKs formation during chemical interesterification. Furthermore, the reduction in DAKS formation when the catalyst concentration is lowered from 0.3 to 0.1 wt.% and 0.06 wt.% is unexpected. Thus, the level of DAKs is surprisingly lowered in a non-linear fashion.

**Claims**

1. A process for producing randomised palm oil stearin with a reduced level of dialkylketones (DAKs) of from 1 to 140 ppm, which comprises the step of chemical interesterification of palm oil stearin in the presence of an interesterification catalyst, wherein the amount of catalyst is selected so as to reduce the level of DAKs.

2. The process according to Claim 1, wherein

   (i) the interesterification is carried out for greater than 10 minutes; and/or
   (ii) the interesterification is carried out at a temperature of from 30 to 120°C; and/or
   (iii) the amount of interesterification catalyst is from 0.01 to 0.50 wt.% based on the total weight of the palm oil stearin.

3. The process according to Claim 1 or Claim 2, wherein the interesterification catalyst is sodium methoxide.

4. The process according to any one of Claims 1 to 3, wherein the palm oil stearin comprises less than 0.1 wt.% free fatty acids based on the total weight of the palm oil stearin, and/or
   wherein the palm oil stearin comprises triglycerides, diglycerides, monoglycerides, free fatty acids, or combinations thereof, and/or
   wherein the palm oil stearin comprises at least 80 wt. % triglycerides, and/or
   wherein the melting point of the palm oil stearin is greater than 40°C.

5. The process according to any one of Claims 1 to 4, wherein the palm oil stearin is a palm oil stearin fraction, and/or
   wherein the palm oil stearin comprises tripalmitoyl glyceride, and/or
   wherein the palm oil stearin has an IV of 20 to 40, preferably,
   wherein the palm oil stearin has an IV of 4 to 14.

6. The process according to any one of Claims 1 to 5, wherein the level of DAKs in the randomised palm oil stearin is from 1 to 139 ppm, and/or
   wherein the randomised palm oil stearin comprises at least partially randomized glycerides, and/or
   wherein the interesterification reaction mixture is substantially free of water.

7. A process for the production of a fat composition suitable for use in an infant formula comprising subjecting the randomised palm oil stearin produced according to any one of Claims 1 to 6 to enzymatic transesterification with oleic acid or a non-glyceride ester thereof; and fractionating the product of enzymatic transesterification.

8. A randomised palm oil stearin, comprising DAKs at a level of from 1 to 140 ppm.

9. A composition comprising 1,3-dioleoyl-2-palmitoyl glyceride (OPO), and DAKs at a level of from 1 to 140 ppm.

10. A fat blend comprising: a composition according to Claim 9; at least one vegetable oil; and DAKs at a level of from 1 to 138 ppm.

**11.** An infant food formula comprising: a fat blend according to Claim 10, or a composition according to Claim 9; and DAKs at a level of from 1 to 40 ppm.

**12.** A randomised palm oil stearin obtainable by the process according to any one of Claims 1 to 6.

**13.** A process for producing infant formula comprising the step of chemical interesterification of palm oil stearin in the presence of an interesterification catalyst, wherein the amount of catalyst is selected so as to reduce the level of DAKs and the infant food formula comprises DAKs, and wherein the DAKs are present at a level of from 1 to 40 ppm.

**14.** The process according to Claim 13, wherein the amount of interesterification catalyst is from 0.03 to 0.25 wt.% based on the total weight of the palm oil stearin.

**15.** The process according to Claim 13 or Claim 14, wherein the infant food formula is as defined in Claim 11.

**Patentansprüche**

**1.** Verfahren zum Herstellen von randomisiertem Palmölstearin mit einer reduzierten Konzentration von Dialkylketon (DAKs) von 1 bis 140 ppm, umfassend den Schritt der chemischen Umesterung von Palmölstearin in Gegenwart eines Umesterungskatalysators, wobei die Katalysatormenge so gewählt wird, dass die Konzentration an DAKs verringert wird.

**2.** Verfahren nach Anspruch 1, wobei

(i) die Umesterung länger als 10 Minuten durchgeführt wird; und/oder
(ii) die Umesterung bei einer Temperatur von 30 bis 120 °C durchgeführt wird; und/oder
(iii) die Menge an Umesterungskatalysator zwischen 0,01 bis 0,50 Gew.-% bezogen auf das Gesamtgewicht des Palmölstearins beträgt.

**3.** Verfahren nach Anspruch 1 oder Anspruch 2, wobei der Umesterungskatalysator Natriummethoxid ist.

**4.** Verfahren nach einem der Ansprüche 1 bis 3, wobei das Palmölstearin bezogen auf das Gesamtgewicht des Palmölstearins weniger als 0,1 Gew.-% freie Fettsäuren umfasst und/oder wobei das Palmölstearin Triglyceride, Diglyceride, Monoglyceride, freie Fettsäuren oder Kombinationen davon umfasst und/oder wobei das Palmölstearin mindestens 80 Gew.-% Triglyceride umfasst und/oder wobei der Schmelzpunkt des Palmölstearins größer als 40 °C ist.

**5.** Verfahren nach einem der Ansprüche 1 bis 4, wobei das Palmölstearin eine Palmölstearinfraktion ist, und/oder wobei das Palmölstearin Tripalmitoyl-Glycerid umfasst und/oder wobei das Palmölstearin eine IV von 20 bis 40 aufweist, vorzugsweise wobei das Palmölstearin einen tv von 4 bis 14 aufweist.

**6.** Verfahren nach einem der Ansprüche 1 bis 5, wobei die Konzentration an DAKs in dem randomisierten Palmölstearin 1 bis 139 ppm beträgt und/oder wobei das randomisierte Palmölstearin zumindest teilweise randomisierte Glyceride umfasst und/oder wobei das Umesterungsreaktionsgemisch im Wesentlichen wasserfrei ist.

**7.** Verfahren zum Herstellen einer Fettzusammensetzung, welche zum Verwenden in einer Säuglingsnahrung geeignet ist, umfassend das Unterziehen des randomisierten Palmölstearins, das nach einem der Ansprüche 1 bis 6 hergestellt wurde, der enzymatischen Umesterung mit Ölsäure oder einem Nicht-Glycerid-Ester davon; und Fraktionieren des Produkts der enzymatischen Umesterung.

**8.** Randomisiertes Palmölstearin, das DAK in einer Konzentration von 1 bis 140 ppm umfasst.

**9.** Zusammensetzung, die 1,3-Dipleoyl-2-palmitoyl-glycerid (OPO) und DAK in einer Konzentration von 1 bis 140 ppm umfasst.

**10.** Fettmischung, umfassend: eine Zusammensetzung nach Anspruch 9, mindestens ein Pflanzenöl; und DAKs in einer Konzentration von 1 bis 138 ppm.

**11.** Säuglingsnahrung, umfassend: eine Fettmischung nach Anspruch 10 oder eine Zusammensetzung nach Anspruch 9; und DAKs in einer Konzentration von 1 bis 40 ppm.

**12.** Randomisiertes Palmölstearin, erhältlich durch das Verfahren nach einem der Ansprüche 1 bis 6.

**13.** Verfahren zum Herstellen von Säuglingsnahrung umfassend den Schritt der chemischen Umesterung von Palmölstearin in Gegenwart eines Umesterungskatalysators, wobei die Menge des Katalysators ausgewählt ist, um die Konzentration der DAKs zu reduzieren und die Säuglingsnahrung DAKs umfasst, und wobei die DAKs in einer Konzentration von 1 bis 40 ppm vorliegen.

**14.** Verfahren nach Anspruch 13, wobei die Menge des Umesterungskatalysators 0,03 bis 0,25 Gew.-% beträgt, bezogen auf das Gesamtgewicht des Palmölstearins.

**15.** Verfahren nach Anspruch 13 oder Anspruch 14, wobei die Säuglingsnahrung in Anspruch 11 definiert ist.

## Revendications

**1.** Procédé de production de stéarine d'huile de palme randomisée avec une concentration réduite de dialkylcétones (DAK) comprise entre 1 et 140 ppm, qui comprend l'étape d'interestérification chimique de la stéarine d'huile de palme en présence d'un catalyseur d'interestérification, dans lequel la quantité de catalyseur est choisie de manière à réduire la concentration de DAK.

**2.** Procédé selon la revendication 1, dans lequel

(i) l'interestérification est effectuée pendant plus de 10 minutes ; et/ou
(ii) l'interestérification est réalisée à une température comprise entre 30 et 120 °C ; et/ou
(iii) la quantité de catalyseur d'interestérification est comprise entre 0,01 et 0,50 % en poids par rapport au poids total de la stéarine d'huile de palme.

**3.** Procédé selon la revendication 1 ou 2, dans lequel le catalyseur d'interestérification est le méthylate de sodium.

**4.** Procédé selon l'une des revendications 1 à 3, dans lequel la stéarine d'huile de palme comprend moins de 0,1 % en poids d'acides gras libres par rapport au poids total de la stéarine d'huile de palme, et/ou dans lequel la stéarine d'huile de palme comprend des triglycérides, des diglycérides, des monoglycérides, des acides gras libres, ou des combinaisons de ces éléments, et/ou dans lequel la stéarine d'huile de palme comprend au moins 80 % en poids de triglycérides, et/ou dans lequel le point de fusion de la stéarine d'huile de palme est supérieur à 40 °C.

**5.** Procédé selon l'une des revendications 1 à 4, dans lequel la stéarine d'huile de palme est une fraction de stéarine d'huile de palme, et/ou dans lequel la stéarine d'huile de palme comprend du tripalmitoyl-glycéride, et/ou dans lequel la stéarine d'huile de palme a un IV compris entre 20 et 40, dans lequel la stéarine d'huile de palme a de préférence un IV compris entre 4 et 14.

**6.** Procédé selon l'une des revendications 1 à 5, dans lequel la concentration de DAK dans la stéarine d'huile de palme randomisée est comprise entre 1 et 139 ppm, et/ou dans lequel la stéarine d'huile de palme randomisée comprend au moins partiellement des glycérides randomisés, et/ou dans lequel le mélange réactionnel d'interestérification est sensiblement exempt d'eau.

**7.** Procédé de production d'une composition de graisse appropriée pour être utilisée dans une formule pour nourrissons, qui comprend la soumission de la stéarine d'huile de palme randomisée produite conformément à l'une des revendications 1 à 6 pour la transestérification enzymatique avec de l'acide oléique ou un ester non glycéride de celui-ci, et le fractionnement du produit de transestérification enzymatique.

**8.** Stéarine d'huile de palme randomisée comprenant des DAK à une concentration comprise entre 1 et 140 ppm.

**9.** Composition comprenant du 1,3-dioléoyl 2-palmitoyl glycéride (OPO) et des DAK à une concentration comprise entre 1 et 140 ppm.

**10.** Mélange de matières grasses comprenant : une composition selon la revendication 9, au moins une huile végétale et des DAK à une concentration comprise entre 1 et 138 ppm.

11. Formule alimentaire pour nourrissons comprenant : un mélange de matières grasses selon la revendication 10 ou une composition selon la revendication 9 et des DAK à une concentration comprise entre 1 et 40 ppm.

12. Stéarine d'huile de palme randomisée pouvant être obtenue par le procédé selon l'une des revendications 1 à 6.

13. Procédé de production d'une formule pour nourrissons comprenant l'étape d'interestérification chimique de la stéarine d'huile de palme en présence d'un catalyseur d'interestérification, dans lequel la quantité de catalyseur est choisie de manière à réduire la concentration de DAK et la formule alimentaire pour nourrissons comprend des DAK, et dans lequel la concentration de DAK est comprise entre 1 et 40 ppm.

14. Procédé selon la revendication 13, dans lequel la quantité de catalyseur d'interestérification est comprise entre 0,03 et 0,25 % en poids par rapport au poids total de la stéarine d'huile de palme.

15. Procédé selon la revendication 13 ou 14, dans lequel la formule alimentaire pour nourrissons est telle que définie dans la revendication 11.

*Fig. 1*

*Fig. 2*

**EP 2 173 197 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0209327 A
- GB 1577933 A
- WO 2005036987 A
- WO 2005037373 A
- WO 2007029018 A
- EP 07250834 A
- EP 2008001543 W
- US 4567056 A
- US 6034130 A
- US 20060154986 A
- US 20060105090 A
- EP 0803196 A
- US 3634100 A
- WO 2007029020 A
- WO 2006114791 A
- EP 0457401 A
- EP 0739591 A

**Non-patent literature cited in the description**

- **FREEMAN et al.** *J. Dairy Sci.,* 1965, 853
- **FILER et al.** *J. Nutrition,* vol. 99, 293-298
- **VERHE R et al.** *97th AOCS Annual Meeting & Expo,* 30 April 2006
- *ASTM D5554-95,* 2001